# FASCICULE DE BREVET EUROPEEN

(11) **EP 1 800 070 B1**
(45) Date de publication et mention de la délivrance du brevet: **17.12.2008**
(21) Numéro de dépôt: 05787472.9
(22) Date de dépôt: 15.09.2005
(51) Int. Cl.: F25B 21/02, B67D 1/08

(54) **FONTAINE A EAU A FAIBLE ENCOMBREMENT**
KLEINE FLASCHENWASSERABGABESTATION
SMALL-SIZED BOTTLED WATER STATION

(30) Priorité: 15.09.2004 FR 0409746
(43) Date de publication de la demande: 27.06.2007
(73) Titulaire: Mistral Constructeur, 91130 Ris Orangis (FR)
(72) Inventeur: LICCIONI, Robert, F-77150 Lesigny (FR)
(74) Mandataire: Santarelli
(86) Numéro de dépôt international: PCT/IB2005/002729
(87) Numéro de publication internationale: WO 2006/030292

(56) Documents cités:
- EP-A- 0 990 863
- WO-A-20/04065254
- US-A- 3 934 758
- US-A1- 2003 115 902

## Description

La présente invention concerne la conception et la réalisation de fontaines de distribution d'eau rafraîchie à partir d'une bonbonne de réserve d'eau, en général une bonbonne interchangeable qui se dispose en position inversée sur la fontaine, son col étant dirigé vers le bas, pour faciliter une alimentation de la fontaine s'effectuant par gravité. Les fontaines de ce type les plus courantes comportent un réservoir qui est alimenté par un doigt de prélèvement qui s'insère de manière étanche dans le col de la bonbonne, comme il est décrit notamment dans le document de brevet WO 02/081361. L'eau prélevée située dans le réservoir est refroidie par un dispositif réfrigérant, avant d'être distribuée par un robinet extérieur. En général, ces fontaines sont conçues avec un autre robinet fournissant de l'eau à température ambiante qui n'est pas passée par ledit réservoir.

L'invention concerne plus particulièrement les fontaines de faible encombrement, à capacité relativement faible, qui sont destinées en particulier à un usage domestique, car c'est principalement dans ce cas qu'il est approprié d'utiliser comme dispositif réfrigérant un élément réfrigérant à effet Peltier. Des fontaines à effet Peltier sont décrites notamment dans le document de brevet déjà cité, ainsi que dans le document de brevet US 2003/0115902. Le document EP 0 990 863 décrit une fontaine selon le préambule de la revendication 1. On pourra éventuellement se référer à ces documents pour une description des dispositifs réfrigérants impliquant des éléments thermoélectriques générateurs de froid par effet Peltier.

Dans les fontaines à réfrigération par effet Peltier connues, l'ensemble du dispositif réfrigérant est disposé en dessous du réservoir, pour refroidir au mieux l'eau qu'il contient au voisinage de son fond, là où l'eau refroidie est soutirée vers le robinet de distribution extérieur. Il en résulte que l'encombrement en hauteur de la fontaine est important, surtout en tenant compte de la bonbonne d'alimentation qui la surmonte, ce qui interdit son usage dans un espace de hauteur relativement faible, par exemple, sur la table de travail d'une cuisine, en dessous des éléments de rangement (hauteur disponible de l'ordre de 50 cm).

La présente invention vise à éviter cet inconvénient en permettant une autre implantation, où les éléments du dispositif réfrigérant sont disposés latéralement dans la fontaine, à côté du réservoir contenant l'eau à refroidir. La fontaine suivant l'invention permet cette disposition sans que ce soit au détriment de l'efficacité de refroidissement. Par les caractéristiques revendiquées à titre principal ou à titre secondaire, l'invention permet aussi d'améliorer la capacité réfrigérante, à la fois en augmentant la surface de paroi du réservoir impliquée dans les échanges thermiques avec le dispositif réfrigérant à effet Peltier et en assurant un contact thermique de meilleure qualité entre cette surface et le dispositif réfrigérant par l'intermédiaire d'un échangeur de transfert thermique. La fontaine à réfrigération par effet Peltier de la présente invention est en outre conçue pour concilier la réduction de l'encombrement en hauteur avec une bonne commodité d'emploi, en particulier en facilitant d'extraire l'ensemble des éléments venant en contact avec l'eau dans la fontaine pour les nettoyer ou les remplacer.

Suivant l'invention, l'ensemble classique du dispositif de réfrigération (comprenant essentiellement l'élément à jonctions thermoélectriques et le radiateur à ailettes d'où la chaleur dégagée est évacuée sous l'assistance d'un ventilateur) se place à côté du réservoir dans le caisson de la fontaine et le réservoir est donc avantageusement placé au fond du caisson, ce qui limite l'encombrement en hauteur de la fontaine. Un échangeur de chaleur spécifique est prévu pour assurer le transfert thermique entre l'élément réfrigérant du dispositif de réfrigération à effet Peltier et le réservoir. Le réservoir forme un évidement par lequel l'échangeur s'insère dans une cavité de forme complémentaire de celle de l'échangeur qui est ménagée en sous-face du réservoir. Un bon contact thermique est assuré par le fait que la paroi inférieure du réservoir est en appui sur l'échangeur sous le poids de l'eau qu'il contient.

De préférence, l'échangeur est constitué en un bloc massif en matériau de bonne conductibilité thermique et mécaniquement résistant qui présente une forme prismatique offrant sous le réservoir des faces d'appui pour les faces correspondantes de la forme complémentaire du réservoir qui sont orientées de manière à faire supporter le poids du réservoir par l'échangeur, de préférence en biais pour augmenter la surface d'appui créée. Une telle forme prismatique de l'échangeur permet d'avoir une surface de contact importante entre l'échangeur et la paroi du réservoir de manière à obtenir un refroidissement efficace de l'eau du réservoir. Cette efficacité est due en particulier au fait que la paroi inférieure du réservoir, au niveau de l'évidement, est pressé contre l'échangeur par le poids de l'eau contenue dans le réservoir et par le fait que sa paroi épouse complètement le profil de l'échangeur. Pour un réservoir réalisé d'une seule pièce par moulage comme on le fait couramment dans des fabrications à partir de matériaux polymères, la qualité de l'appui, donc du contact, peut encore être améliorée, en même temps que l'efficacité du transfert thermique, en réduisant l'épaisseur de la paroi du réservoir au niveau des faces de la forme prismatique suivant lesquelles le réservoir prend appui sur l'échangeur par rapport à l'épaisseur de paroi du reste du réservoir.

Selon une autre caractéristique de l'invention, la fontaine comporte une pompe à air qui, lors de chaque prélèvement d'eau, insuffle de l'air dans la bonbonne, en remplacement de l'eau prélevée. L'application de la pression d'air est actionnée par un robinet de distribution d'eau commandé manuellement de l'extérieur de la fontaine. On assure ainsi un bon écoulement de l'eau, même quand la bonbonne est presque vide. Le ou les robinets de distribution extérieurs peuvent avantageusement être disposés au dessus du réservoir de manière à dégager une hauteur suffisante pour les gobelets recevant l'eau distribuée en sortie de la fontaine. Une telle conception de la fontaine suivant l'invention est favorable à la compacité de l'ensemble. Elle apport solution au problème de hauteur d'eau que peut poser une alimentation par simple gravité.

Selon encore une autre caractéristique de l'invention, le réservoir comporte un bouchon amovible qui supporte le doigt de prélèvement, avec les canalisations internes traversant le bouchon. Ceci permet de placer la bonbonne au plus près du réservoir et de réduire encore l'encombrement en hauteur. Par ailleurs, le doigt de prélèvement peut être extrait du caisson en même temps que le réservoir sur lequel il est fixé.

Avantageusement, la distribution d'eau fraîche s'effectue à travers le bouchon, par une canalisation de prélèvement d'eau rafraîchie qui traverse le bouchon, dont une extrémité inférieure, se situant au-dessous du bouchon, débouche au fond du réservoir, là où l'eau à plus basse température tend à se rassembler, et dont l'extrémité supérieure opposée est reliée à un robinet de distribution d'eau rafraîchie. Par ailleurs, on peut prévoir en outre une canalisation de prélèvement d'eau à température ambiante qui traverse le bouchon, dont une extrémité débouche au voisinage de la sortie du doigt de prélèvement et dont l'autre extrémité est reliée à un robinet de distribution d'eau à température ambiante. Ce dernier est avantageusement placé à côté du robinet de distribution d'eau froide.

Grâce à ces dispositions, l'ensemble des éléments recevant l'eau de la bonbonne peut constituer un bloc qui est extrait en entier du caisson pour être démonté ensuite pour son nettoyage.

Avantageusement, le ou les robinets de distribution sont placés de manière amovible dans un logement ménagé dans le caisson et ils sont actionnés chacun par un dispositif de commande, tel qu'un levier, qui est monté à articulation sur le caisson. Il est prévu de permettre d'extraire les robinets du caisson en même temps que les autres éléments recevant l'eau de la bonbonne et de simplifier encore l'opération de nettoyage.

Avantageusement, la pompe à air est actionnée électriquement et le robinet de distribution actionne un commutateur électrique qui commande le fonctionnement de la pompe à air. Dans le cas où la fontaine fournit aussi de l'eau à température ambiante, le robinet de distribution d'eau rafraîchie et le robinet de distribution d'eau à température ambiante actionnent un commutateur commun.

L'invention sera maintenant plus complètement décrite dans le cadre de caractéristiques préférées et de leurs avantages, en faisant référence aux figures 1 à 8 dans lesquelles :
- la figure 1 est une vue en coupe d'une fontaine conforme à l'invention avec sa bonbonne ;
- la figure 2 est une vue partielle en coupe d'une moitié de la fontaine montrant le dispositif réfrigérant ;
- la figure 3 est une vue en perspective du réservoir avec le bouchon à l'état démonté ;
- la figure 4 est une vue en perspective de l'ensemble des éléments recevant l'eau de la bonbonne à l'état monté ;
- la figure 5 est une vue de dessus de la fontaine, la bonbonne et le couvercle ayant été enlevés ;
- la figure 6 est une vue en coupe du bouchon;
- et les figures 7 et 8 sont des vues en perspective du bouchon, vu respectivement du dessous et du dessus.

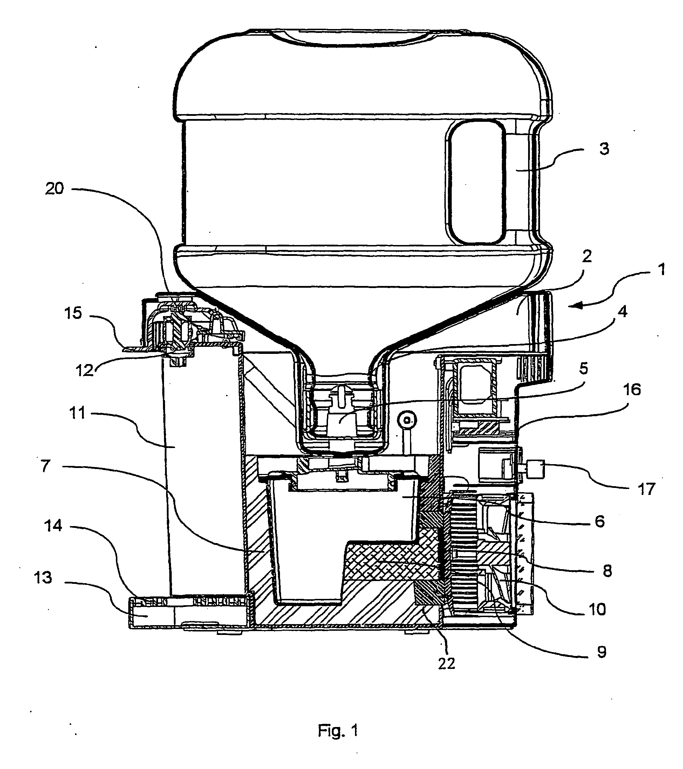

La figure 1 représente une fontaine fournissant de l'eau rafraîchie et de l'eau à température ambiante. Les éléments fonctionnels sont protégés dans un caisson 1, fermé par un couvercle 2. Le couvercle 2 reçoit une bonbonne 3 qui est en position inversée, avec son col dirigé vers le bas. La bonbonne 3 est entièrement supportée par le couvercle 2. Un doigt de prélèvement d'eau 5 est inséré de manière étanche dans le col 4 de la bonbonne 3 pour relier celle-ci à un réservoir 6 qui est disposé dans le fond du caisson 1 et qui est entouré par un compartiment isolant 7.

Le dispositif réfrigérant comprend un élément réfrigérant à effet Peltier 8 qui refroidit un échangeur de chaleur constitué, par exemple, par une pièce métallique 9.

Sur sa face avant (à gauche sur la figure 1), le caisson 1 présente un évidement 11 au dessus duquel se trouvent les robinets de distribution de l'eau 12. Dans le bas de l'évidement 11, un bac de récupération 13 est fixé de manière amovible ; il comporte un caillebotis 14 sur lequel on place les gobelets recevant l'eau en sortie des robinets de distribution 12. Ces derniers sont placés de manière amovible dans un logement ménagé dans la partie supérieure du caisson 1. Leur commande en ouverture et en fermeture du circuit d'eau est assurée à partir de dispositifs de commande accessibles de l'extérieur du caisson. Il s'agit de leviers 15 qui sont montés à articulation dans la paroi du caisson. Chacun de ces leviers 15 actionne un commutateur électrique commun 20 qui commande le fonctionnement d'une pompe à air insufflant de l'air dans la bonbonne.

Sur la paroi arrière 16 (à droite sur la figure 1) du caisson 1, on prévoit un raccordement électrique, un interrupteur de marche et un bouton de réglage de la température 17 pour la régulation de la température de l'eau refroidie. Ces éléments sont reliés à un module électrique et électronique 18 qui commande le fonctionnement de la fontaine.

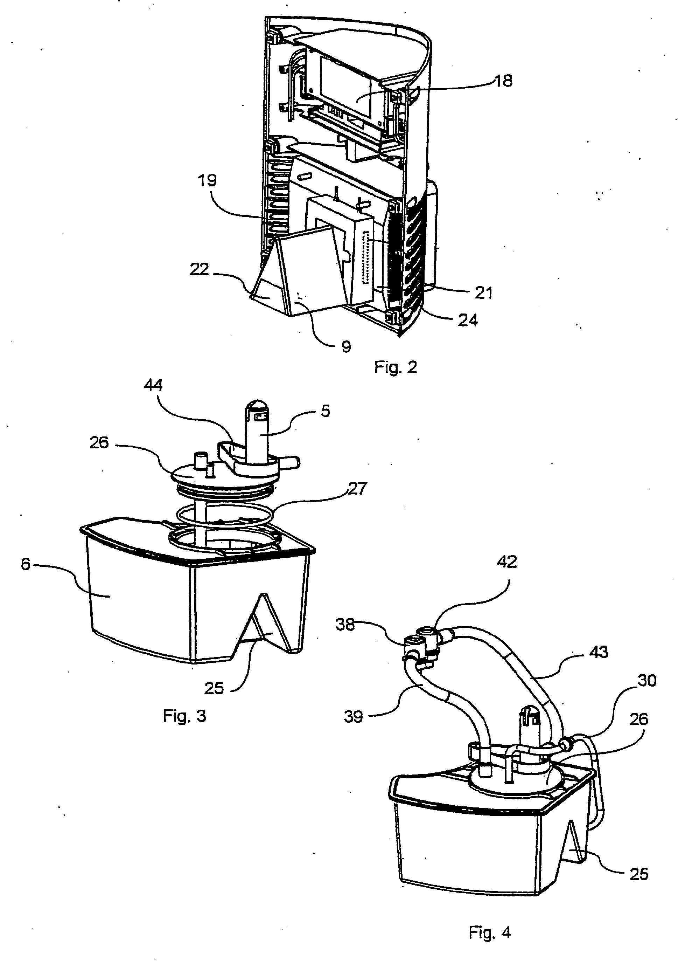

Sur la figure 2, on voit le module électrique et électronique 18 et le dispositif réfrigérant, qui est constitué d'une cellule électronique 21 qui refroidit un échangeur 9. L'échangeur 9 est réalisé massif en une matière de bonne conductibilité thermique, notamment de nature métallique. Il est de forme prismatique, à section triangulaire. Son arête 19 est dirigée vers le haut. A sa base, du côté du dispositif réfrigérant, il est disposé une pièce thermiquement isolante 22, dont le rôle est d'éviter la condensation d'eau, ou du moins de limiter les effets des phénomènes de condensation. Derrière la cellule électronique 21 se trouve un radiateur, auquel est associé un ventilateur 10 assurant l'extraction de chaleur à l'arrière du caisson 1 (voir figure 1).

Sur les figures 3 et 4, on voit que le réservoir 6 présente un évidement latéral 25 dont la forme est complémentaire de celle de l'échangeur 9 et qui est ouvert vers le bas. Quand le réservoir 6 est posé sur l'échangeur 9, la paroi de son évidement latéral 25 vient se plaquer contre l'échangeur 9 sous l'effet du poids de l'eau contenue dans le réservoir 6. Le réservoir 6 est en une matière polymère semi-rigide, par exemple de 2 mm d'épaisseur, et dans ce cas la paroi de l'évidement latéral 25 n'a que 1 mm d'épaisseur. Le fait que la paroi soit plus fine et plus souple à ce niveau favorise le contact thermique là où, du point de vue mécanique, la paroi est correctement supportée par le bloc échangeur. On améliore ainsi la qualité du transfert thermique opéré par le bloc 9 entre l'élément réfrigérant par effet Peltier 8 et l'eau contenue dans le réservoir.

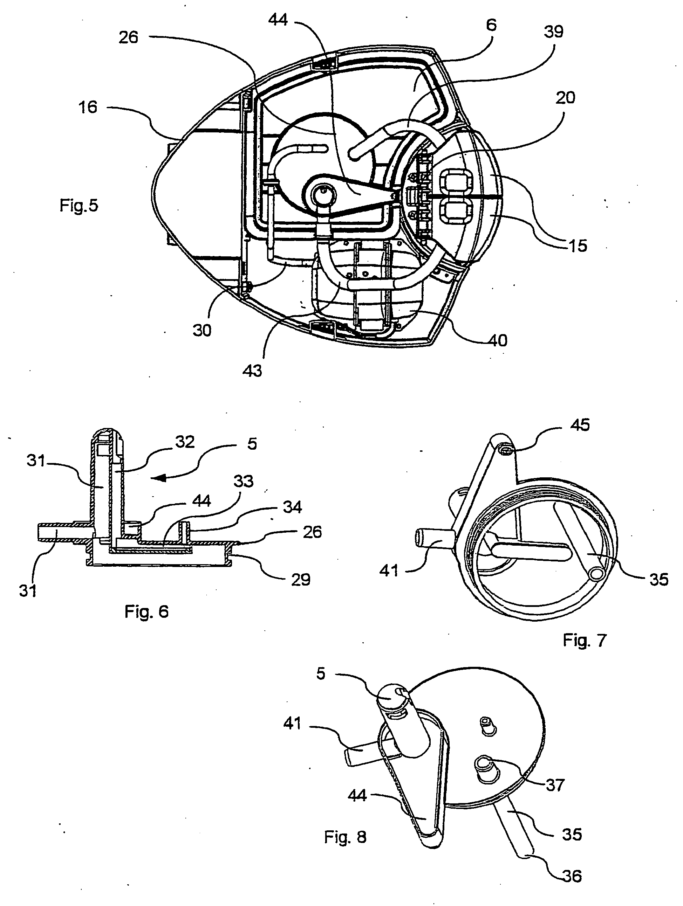

Le réservoir 6 comporte un bouchon amovible 26 de forme circulaire dont le diamètre est important. Cela facilite le nettoyage du réservoir 6. Le bouchon 26 est fixé de manière étanche sur le réservoir 6 au moyen d'un joint torique 27 qui s'engage dans une gorge 29 (voir sur la figure 6). Le doigt de prélèvement 5 est d'une seule pièce avec le bouchon 26. Il comporte une canalisation intérieure d'alimentation en eau 31 et une canalisation intérieure de retour de l'air 32 (voir figure 6). La canalisation intérieure d'alimentation en eau 31 débouche juste au dessous du bouchon 26. La canalisation intérieure de retour de l'air 32 est reliée à une canalisation horizontale 33 qui est ménagée dans le bouchon 26 et qui est reliée à un raccord d'entrée d'air 34 sur lequel est branché un conduit souple 30. Ce dernier est relié à une pompe à air 40 qui est disposée à côté du dispositif réfrigérant (voir figure 5).

Une canalisation de prélèvement d'eau rafraîchie 35 traverse le bouchon 26. Son extrémité inférieure 36 est disposée au fond du réservoir 6 et son extrémité supérieure 37 est reliée au robinet de distribution d'eau rafraîchie 38 par l'intermédiaire d'un conduit souple 39. Une canalisation de prélèvement d'eau à température ambiante 41 traverse le bouchon 26. Son extrémité inférieure est disposée au niveau de la sortie de la canalisation intérieure d'alimentation en eau 31 et son extrémité supérieure est reliée au robinet de distribution d'eau à température ambiante 42 par l'intermédiaire d'un conduit souple 43.

Comme on peut le voir sur les figures 3 à 8, le bouchon 26 comprend, sur sa face extérieure, une cuvette 44 qui entoure le doigt de prélèvement 5. Un orifice d'évacuation 45 est prévu dans le fond de la cuvette 44 (voir figure 7). Cet orifice d'évacuation 45 débouche au dessus d'une canalisation verticale qui est ménagée dans le compartiment isolant 7 et qui débouche dans le bac de récupération 13.

Le fonctionnement de la fontaine qui vient d'être décrite est le suivant.

On fixe le bouchon 26 sur le réservoir 6 et on assemble en un bloc l'ensemble des éléments avec lesquels l'eau de la bonbonne a contact dans la fontaine, à savoir le bouchon 26, les conduits 39 et 43, les robinets 38 et 42. Le bloc ainsi constitué est mis en place dans le caisson 1, le réservoir 6 venant en appui sur l'échangeur 9. Les robinets sont mis en place dans leur logement sous les leviers 15. On met alors le couvercle 2 en place sur le caisson 1 et on met la bonbonne interchangeable 3 en place sur le doigt de prélèvement 5.

La fontaine est alors prête à fonctionner. Quand on appuie sur un levier 15, le commutateur 20 commande le fonctionnement de la pompe à air 40. De l'air est envoyé dans la bonbonne 3, ce qui pousse l'eau de la bonbonne 3 dans le réservoir 6. L'eau prélevée par la canalisation 35 ou 41 parvient au robinet correspondant. La canalisation 35 prélève l'eau à la sortie du doigt de prélèvement 5, l'eau prélevée étant donc à la température ambiante. La canalisation 41 prélève de l'eau qui se trouve au fond du réservoir 6 et qui est donc rafraîchie au maximum. On prévoit des sondes thermiques pour mesurer la température de l'eau et de l'échangeur 9 pour réaliser une régulation de température, le bouton 17 servant à régler la valeur de la température de consigne.

Quand on désire réaliser le nettoyage de l'ensemble des éléments recevant l'eau de la bonbonne, on enlève la bonbonne et le couvercle, on dégage les robinets de leur logement et on débranche le conduit 29 du raccord 38. On peut alors extraire le bloc constitué par le réservoir 6, les différents conduits d'eau et les robinets pour les séparer ensuite et les nettoyer, par exemple dans une machine à laver la vaisselle. Lorsqu'ils ont été nettoyés, on remonte la fontaine comme indiqué plus haut.

La description qui précède explique clairement comment l'invention procède d'une manière que ne pouvait prédire l'homme de l'art et comment elle permet d'atteindre les objectifs qu'elle s'est fixés. En particulier, on obtient une fontaine de faible hauteur qui peut être utilisée sur un plan de travail d'une cuisine. Les opérations de nettoyage périodique sont réalisées facilement et rapidement. La réfrigération est efficace du fait du contact intime entre l'échangeur de transfert thermique et l'évidement latéral 25.

Il ressort néanmoins de ce qui précède que l'invention n'est pas limitée aux modes de mise en oeuvre qui ont été spécifiquement décrits dans le courant des exemples ci-dessus et qu'elle s'étend au contraire à toute variante passant par le biais de moyens équivalents. En particulier, on peut concevoir des fontaines à réfrigération par effet Peltier qui fournissent uniquement de l'eau rafraîchie ou qui fournissent aussi de l'eau chaude. On pourrait aussi utiliser, au lieu d'un métal, toute autre matière à forte conductibilité thermique pour réaliser l'échangeur assurant le transfert thermique entre le système producteur de froid par effet Peltier et le réservoir à eau rafraîchie.

## Revendications

1. Fontaine pour la distribution d'eau rafraîchie, à partir d'une bonbonne d'alimentation en eau (3), comportant un réservoir (6) et un dispositif de réfrigération par effet Peltier pour refroidir l'eau se trouvant dans ledit réservoir (6) recevant l'eau prélevée de ladite bonbonne et d'où l'eau ainsi rafraîchie est soutirée par un robinet de distribution accessible à l'extérieur de la fontaine ledit dispositif de réfrigération par effet Peltier se disposant sur le côté du réservoir, **caractérisée en ce que** ledit réservoir (6) ménage en sous-face du réservoir un évidement (25) s'ouvrant latéralement audit réservoir et **en ce qu'**elle comporte un échangeur de chaleur (9) de forme complémentaire de celle dudit évidement s'insérant latéralement dans ledit évidement pour assurer le transfert thermique entre ledit réservoir et l'élément réfrigérant dudit dispositif de réfrigération par effet Peltier.

2. Fontaine selon la revendication 1 **caractérisée en ce que** ledit échangeur est constitué en un bloc massif en matériau de bonne conductibilité thermique et mécaniquement résistant qui présente une forme prismatique offrant sous le réservoir des faces d'appui pour les faces correspondantes de la forme complémentaire du réservoir qui sont orientées de manière à faire supporter le poids du réservoir par l'échangeur, de préférence en biais pour augmenter la surface d'appui créée.

3. Fontaine selon la revendication 1 ou 2, **caractérisée en ce que** ledit réservoir est réalisé à paroi souple, au moins au niveau de son évidement (25), là où le réservoir (6) en sa paroi inférieure vient en appui sur l'échangeur (9), et en contact thermique avec lui, sous le poids de l'eau qu'il contient.

4. Fontaine selon l'une quelconque des revendications 1 à 3, du type à bonbonne interchangeable se disposant en position inversée sur un couvercle de la fontaine, **caractérisée en ce que** le réservoir (6) se ferme par un bouchon amovible (26) qui intègre un doigt (5) de prélèvement d'eau dans la bonbonne pour alimenter ledit réservoir (6) en remplacement de l'eau rafraîchie soutirée par le robinet extérieur et qui supporte une canalisation conduisant l'eau rafraîchie à travers le bouchon (26) entre une extrémité inférieure débouchant au fond du réservoir (6) et une extrémité supérieure opposée qui est reliée au robinet de distribution (38, 12).

5. Fontaine suivant la revendication 4, **caractérisée en ce qu'**elle comporte une pompe à air (40) qui insuffle de l'air dans la bonbonne en passant par le doigt de prélèvement (5) et qui est avantageusement commandée automatiquement lors d'une ouverture du robinet de distribution extérieur (12).

6. Fontaine à eau selon la revendication 4 ou 5, **caractérisée en ce que** le bouchon (26) supporte une canalisation de prélèvement d'eau à température ambiante (41) qui traverse le bouchon (26), dont une extrémité débouche au voisinage de la sortie du doigt de prélèvement (5) et dont l'autre extrémité est reliée à un robinet supplémentaire de distribution d'eau à température ambiante (42).

7. Fontaine à eau selon la revendication 4 ou 5, **caractérisée en ce que** le robinet de distribution (38, 42) est placé de manière amovible dans un logement ménagé dans le caisson (1) de la fontaine et est actionné par un dispositif de commande (15), tel qu'un levier, qui est monté à articulation sur le caisson (1).

8. Fontaine à eau selon l'ensemble des revendications 4 et 7, éventuellement complété par la revendication 6, **caractérisée en ce que** la pompe à air (40) est actionnée électriquement et en ce le dispositif de commande (15) du robinet de distribution extérieur (38) actionne un commutateur électrique (20) qui commande le fonctionnement de la pompe d'insufflation d'air (40), le robinet de distribution d'eau à température ambiante (42) s'il est prévu actionnant avec le robinet de distribution d'eau rafraîchi un commutateur commun (20).

9. Fontaine à eau selon l'une quelconque des revendications 4 à 8, **caractérisée en ce que** ladite bonbonne interchangeable se dispose en position inversée sur le couvercle (2) d'un caisson (1) de la fontaine et **en ce que** le bouchon amovible du réservoir comprenant le doigt de prélèvement (5) comprend sur sa face externe, une cuvette (44) qui entoure le doigt de prélèvement (5) et qui comporte un orifice d'évacuation (45).

10. Fontaine à eau selon la revendication 9, **caractérisée en ce qu'**elle comporte un bac de récupération (13) qui comporte un caillebotis (14) support des récipients à boire, tels que des godets, et **en ce que** le réservoir (6) est entouré par un compartiment isolant (7) qui comporte une canalisation interne reliant la cuvette (44) au bac de récupération (13).

11. Fontaine selon l'une quelconque des revendications 1 à 10, **caractérisée en ce que** le réservoir (6) forme avec le ou les robinets de distribution (38, 42) et le ou les conduits (39, 43) les reliant un bloc amovible.

12. Fontaine selon l'une quelconque des revendications 1 à 11, **caractérisée en ce que** l'évidement (25) du réservoir (6) a une épaisseur de paroi inférieure à celle du reste du réservoir.

## Claims

1. Fountain for the delivery of cooled water, from a water supply demi-john (3), including a Peltier effect refrigerating device for cooling the water in a reservoir (6) receiving water taken from said demi-john and from which water cooled in this way is drawn off via a delivery tap accessible from outside the fountain, **characterised in that** said reservoir (6) is conformed to produce on the undersurface of the reservoir a recess (25) opening laterally and **in that** it includes a heat exchanger (9) of complementary shape to that of said recess and inserted laterally into said recess to transfer heat between said reservoir and the refrigerating element of said Peltier effect refrigerating device, the latter being disposed alongside the reservoir.

2. Fountain according to claim 1 **characterised in that** said exchanger consists of a solid block of a mechanically strong material that is a good conductor of heat and has a prismatic shape offering underneath the reservoir bearing faces for the corresponding faces of the complementary shape of the reservoir which are oriented so that the exchanger supports the weight of the reservoir, preferably slanting to increase the resulting bearing area.

3. Fountain according to claim 1 or 2, **characterised in that** said reservoir has a flexible wall, at least at the level of its recess (25), where the bottom wall of the reservoir (6) bears on the exchanger (9), and in thermal contact with it, under the weight of the water that it contains.

4. Fountain according to any one of claims 1 to 3, of the type with an interchangeable demi-john placed upside-down on a cover of the fountain, **characterised in that** the reservoir (6) is closed by a removable stopper (26) which includes an off-take finger (5) for water in the demi-john to supply said reservoir (6) to replace cooled water drawn off via the external tap and which supports a pipe conveying cooled water through the stopper (26) between a lower end emerging at the bottom of the reservoir (6) and an opposite upper end that is connected to the delivery tap (38, 12).

5. Fountain according to claim 4, **characterised in that** it includes an air pump (40) which pumps air into the demi-john via the off-take finger (5) and that is advantageously operated automatically on opening the external delivery tap (12).

6. Water fountain according to claim 4 or 5, **characterised in that** the stopper (26) supports an ambient temperature water off-take pipe (41) which passes through the stopper (26), one end of which emerges in the vicinity of the outlet of the off-take finger (5) and the other end of which is connected to an additional ambient temperature water delivery tap (42).

7. Water fountain according to claim 4 or 5, **characterised in that** the delivery tap (38, 42) is placed removably in a housing formed in the pedestal (1) of the fountain and is actuated by a control device (15), such as a lever, which is articulated to the pedestal (1).

8. Water fountain according to the combination of claims 4 and 7, where appropriate combined with claim 6, **characterised in that** the air pump (40) is actuated electrically and **in that** the device (15) controlling the external delivery tap (38) actuates an electric switch (20) which controls the operation of the air pump (40), the ambient temperature water delivery tap (42), if present, actuating with the cooled water delivery tap a common switch (20).

9. Water fountain according to any one of claims 4 to 8, **characterised in that** said interchangeable demi-john is placed upside-down on the cover (2) of a pedestal (1) of the fountain and **in that** the removable stopper of the reservoir including the off-take finger (5) includes, on its outer face, a dish (44) which surrounds the off-take finger (5) and which includes a discharge orifice (45).

10. Water fountain according to claim 9, **characterised in that** it includes a recovery tray (13) which includes a grating (14) supporting drinking receptacles, such as beakers, and **in that** the reservoir (6) is surrounded by an insulating compartment (7) which includes an internal pipe linking the dish (44) to the recovery tray (13).

11. Fountain according to any one of claims 1 to 10, **characterised in that** the reservoir (6) forms with the delivery tap(s) (38, 42) and the pipe(s) (39, 43) linking them a removable block.

12. Fountain according to any one of claims 1 to 11, **characterised in that** the recess (25) in the reservoir (6) has a wall thickness less than that of the remainder of the reservoir.

## Patentansprüche

1. Wasserstation zur Abgabe von gekühltem Wasser aus einem Wasserversorgungskanister (3), mit einer Peltier-Effekt-Kühlvorrichtung zum Abkühlen von sich in einem Behältnis (6) befindendem Wasser, das dem Kanister entnommenes Wasser aufnimmt und von wo das so gekühlte Wasser durch einen von außerhalb der Wasserstation zugänglichen Zapfhahn abgezogen wird, **dadurch gekennzeichnet, dass** das Behältnis (6) so konfiguriert ist, dass in seiner Unterseite eine Aussparung (25) ausgebildet ist, die in der Seite mündet, und dass sie einen Wärmetauscher (9) mit komplementärer Form zu der Aussparung aufweist, der seitlich in die Aussparung eingeführt wird, um die Wärmeübertragung zwischen dem Behältnis und dem Kühlelement der Kühlvorrichtung durch Peltier-Effekt zu gewährleisten, wobei die Kühlvorrichtung auf der Seite des Behältnisses angeordnet ist.

2. Wasserstation nach Anspruch 1, **dadurch gekennzeichnet, dass** der Tauscher aus einem mechanisch widerstandsfähigen massiven Materialblock mit guter Wärmeleitfähigkeit gebildet ist, der eine prismatische Form aufweist, die unter dem Behältnis Stützflächen für die entsprechenden Flächen der komplementären Form des Behältnisses bietet, die so, vorzugsweise schräg, um die geschaffene Stützfläche zu vergrößern ausgerichtet sind, dass sie das Gewicht des Behältnisses durch den Tauscher aufnehmen.

3. Wasserstation nach Anspruch 1 oder 2, **dadurch gekennzeichnet, dass** das Behältnis aus einer flexiblen Wand hergestellt ist, zumindest an seiner Aussparung (25), wo das Behältnis (6) an seiner Unterwand unter dem Gewicht des Wassers, das es enthält, in Anlage an den Tauscher (9) und in Wärmekontakt damit kommt.

4. Wasserstation nach einem der Ansprüche 1 bis 3 jener Art mit austauschbarem Kanister, der in umgedrehter Position auf einem Deckel der Wasserstation angeordnet ist, **dadurch gekennzeichnet, dass** das Behältnis (6) durch einen beweglichen Stopfen (26) geschlossen wird, der einen Finger (5) zur Entnahme von Wasser aus dem Kanister zur Versorgung des Behältnisses (6) unter Austausch des durch den äußeren Hahn abgezogenen gekühlten Wassers aufweist, welcher eine Leitung stützt, die das gekühlte Wasser durch den Stopfen (26) zwischen einem unteren Ende, das am Boden des Behältnisses (6) mündet, und einem gegenüberliegenden oberen Ende, das mit einem Zapfhahn (38, 12) verbunden ist, leitet.

5. Wasserstation nach Anspruch 4, **dadurch gekennzeichnet, dass** sie eine Luftpumpe (40) aufweist, die Luft in den Kanister einbläst, die den Entnahmefinger (5) passiert, und die vorteilhafterweise beim Öffnen des äußeren Zapfhahns (12) automatisch aktiviert wird.

6. Wasserstation nach Anspruch 4 oder 5, **dadurch gekennzeichnet, dass** der Stopfen (26) eine Leitung zur Entnahme von Wasser auf Umgebungstemperatur (41) stützt, die den Stopfen (26) durchquert und von der ein Ende in der Nähe des Ausgangs des Entnahmefingers (5) mündet und das andere Ende mit einem zusätzlichen Zapfhahn für Wasser auf Umgebungstemperatur (42) verbunden ist.

7. Wasserstation nach Anspruch 4 oder 5, **dadurch gekennzeichnet, dass** der Zapfhahn (38, 42) auf entfernbare Weise in einer in dem Gehäuse (1) der Wasserstation ausgebildeten Aufnahme platziert ist und durch eine Betätigungsvorrichtung (15), wie zum Beispiel einen an dem Gehäuse (1) angelenkten Hebel, betätigt wird.

8. Wasserstation nach den Ansprüchen 4 bis 7, gegebenenfalls durch Anspruch 6 ergänzt, **dadurch gekennzeichnet, dass** die Luftpumpe (40) elektrisch betätigt wird und dass die Betätigungsvorrichtung (15) des äußeren Zapfhahns (38) einen elektrischen Schalter (20) betätigt, der den Betrieb der Lufteinblaspumpe (40) ansteuert, wobei der Zapfhahn (42) für Wasser auf Umgebungstemperatur, falls er vorgesehen ist, mit dem Zapfhahn für gekühltes Wasser einen gemeinsamen Schalter (20) betätigt.

9. Wasserstation nach einem der Ansprüche 4 bis 8, **dadurch gekennzeichnet, dass** der austauschbare Kanister in einer umgedrehten Position auf dem Deckel (2) eines Gehäuses (1) der Wasserstation angeordnet ist und dass der bewegliche Stopfen des Behältnisses, der den Entnahmefinger (5) enthält, auf seiner Außenfläche eine Wanne (44) enthält, die den Entnahmefinger (5) umgibt und eine Entleerungsöffnung (45) aufweist.

10. Wasserstation nach Anspruch 9, **dadurch gekennzeichnet, dass** sie einen Sammelbehälter (13) aufweist, der ein Trinkbehälter, wie zum Beispiel Becher, stützendes Gitter (14) aufweist, und dass das Behältnis (6) von einer Isolierkammer (7) umgeben ist, die eine innere Leitung, welche die Wanne (44) mit dem Sammelbehälter (13) verbindet, aufweist.

11. Wasserstation nach einem der Ansprüche 1 bis 10, **dadurch gekennzeichnet, dass** das Behältnis (6) mit dem Zapfhahn oder den Zapfhähnen (38, 42) und der Leitung oder den Leitungen (39, 43), die sie verbinden, eine entfernbare Einheit bildet.

12. Wasserstation nach einem der Ansprüche 1 bis 11, **dadurch gekennzeichnet, dass** die Aussparung (25) des Behältnisses (6) eine Wanddicke aufweist, die kleiner ist als die des Rests des Behälters.
